# EUROPEAN PATENT APPLICATION

(11) **EP 4 810 808 A1**
(43) Date of publication of application: **23.09.2026**
(21) Application number: 25165193.1
(22) Date of filing: 21.03.2025
(51) Int. Cl.: F16B 33/02

(54) **THREADED DEVICE WITH IMPROVED THREAD PROFILE**

(71) Applicant: KB Intellectual Property GmbH & Co. KG, 82049 Pullach (DE)
(72) Inventor: TÓTH, Zoltán László, 6100 Kiskunfélegyháza (HU); OLÁH, TIbor, 6000 Kecskemét (HU); PALICSKA, Domonkos, 6000 Kecskemét (HU); GAIKWAD, Prashant, 411033 Pune (IN)

(57) **Abstract**

The present invention refers to a threaded device, in particular a filter cartridge, comprising a first module configured to be connected to a second module (200) of another device via threaded connections, wherein the first module (100) comprises a thread profile, wherein the thread profile (104) comprises a load flank (106) and a stab flank (108), wherein the thread profile (104) of the first module (100) is configured such that the load flank (106) is configured to form a first thread angle (α₁) with an axis (X) perpendicular to a threading axis (Y), wherein the first thread angle (α₁) varies between 0° and 15°, or wherein the thread profile (104) of the first module (100) is configured such that the stab flank (108) is configured to form a second thread angle (α₂) with an axis (X) perpendicular to a screwing axis (Y), wherein the second thread angle (α₂) varies between 0° and -15°. Further, the present invention relates to an air treatment system comprising a threaded device and a pressurized air treatment device.

## Description

The present invention relates to a threaded device, particularly a filter device, such as a filter cartridge with an improved thread design that that ensures reliable attachment, minimizes air leakage, and extends the lifespan of the filter connection.

An air treatment system in a vehicle's compressor is vital for filtering and conditioning air, removing contaminants like dust, moisture, and oil particles. This ensures a clean and dry air supply, enhancing system component efficiency and extending its operational life. However, conventional filter cartridges often face several problems related to the threaded connection, such as improper sealing, difficult installation or removal, and thread wear over time.

Known issues with filter cartridges include loose connections due to constant vibrations and pressure fluctuations, which can cause filter dislodgment or lead to unfiltered air bypassing the filter. Complex assembly processes also make routine filter replacements cumbersome and time-consuming. This results in increased maintenance costs. Poorly designed threads further result in inefficient sealing, increasing the risk of air leaks, reducing filtration performance, and causing premature thread wear from repeated use.

EP 3 303 856 B1 discloses a thread connection having thread angles defined between a load flank and an adjacent root, ranging from 15° to 45°. These steep angles create an undercut that is challenging to form without cutting. The undercut formed by such steep angles requires precision cutting tools.

One disadvantage of using cutting tools in thread manufacturing is the risk of material deformation and micro-cracking. When threads are cut, the material is subjected to localized stress due to the high forces involved in the cutting process. This can lead to the formation of micro-cracks or surface imperfections, which can weaken the thread and reduce its overall strength and durability.

It is an object of the invention to address these challenges by utilizing a manufacturing method that creates strong threads with an improved thread design, ensuring reliable attachment, minimizing air leakage, and extending the lifespan of the filter connection.

These objectives are resolved by a threaded device according to independent claim 1. Preferred embodiments are addressed by the dependent claims respectively.

According to the present invention, a threaded device, in particular a filter cartridge is provided. The threaded device comprises:
- a first module configured to be connected (e.g. attached or fixed) to a second module of a second device (or another device), in particular a pressurized treatment device, via threaded connections,
- wherein the first module comprises a thread profile,
- wherein the thread profile comprises a load flank and a stab flank,
- wherein the thread profile is configured such that the load flank is configured to form a first thread angle (α₁) with a radial axis (X) perpendicular to a threading axis (Y), wherein the first thread angle (α₁) varies between 0° and 15°, preferably 0° to 12°, or
- wherein the thread profile is configured such that the stab flank is configured to form a second thread angle (α₂) with a radial axis (X) perpendicular to a threading axis (Y), wherein the second thread angle (α₂) varies between 0° and - 15°, preferably 0° to -12°,
- wherein the threading axis (Y) defines an axis along which the threads engage during assembly and disassembly,
- wherein positive values of the first thread angle (α₁) denote angles oriented in a disassembly direction (P) (unscrew direction or loosening direction), and negative values denote of the second angle (α₂) oriented in an assembly direction (screw-in direction or tightening direction).

The present invention is based on the basic idea to provide a new thread design with a fully independent structure where the thread flanks are angled on the loaded side between 0° to 15°. Alternatively, the thread flanks on the non-loaded side are angled between 0° to -15°. This approach allows for optimized performance in both assembly and disassembly directions. On the loaded side, the thread flank is angled to better support and distribute mechanical forces, reducing stress concentration and increasing the overall strength of the connection. On the non-loaded side, the flank is angled to facilitate easier disengagement, minimizing resistance during unscrewing and making the disassembly process smoother and quicker. Advantageously, the threaded devices according to the present invention improve thread engagement during assembly and disassembly. In particular, the thread design according to the present invention allows smoother alignment, reducing the risk of cross-threading or damage. Additionally, the thread design according to the present invention provides better load distribution and minimizes deformation, enhancing durability and performance.

In particular, the threaded device of the present invention, including thread angles smaller than ±15°, preferably ±12°, can be advantageously produced by the rolling process. In the rolling process, the material is deformed rather than cut, which eliminates the risk of micro-cracks that can arise in cutting operations. This method of deforming the material maintains the integrity of the grain structure, resulting in threads that are more resistant to stress compared to threads formed through turning.

With steep thread profiles (more inclined thread profiles), the load on the threads may lead to slippage, causing increased deformation and higher localized stress. These additional stresses can damage the threads, leading to cracking, especially when the threads are repeatedly loaded and unloaded.

The combination of thread angles and an increased crest area leads to beneficial load distribution. With more of the load spread over a larger area, the thread is less likely to experience wear, stripping, or failure under heavy use. This design not only improves the thread's ability to withstand stress but also ensures a more secure and reliable connection, while simplifying the process of disassembly. Advantageously, the reduced disengagement force provides the benefit of faster tightening and loosening, resulting in quicker assembly and disassembly of cartridges.

In particular, the thread design of the present invention provides for threads that are less prone to leakage compared to other cartridge thread types. Due to the positive thread angles of the present invention and a specific shape of recess beneath the thread, e.g. in the shape of a conical (tapered) undercut shape of the load flank, the radial movement between the first and second modules are reduced, which enhances the stability of the connection.

In particular, the first and second angels comprise acute angles.

In particular, the first and second angels are within a range varying from 0° to ±15°, preferably between 0° to ±5°, ±5° to ±10°, and/or ±10° to ±12°.

In particular, the thread profile further comprises a crest, in particular a wide crest.

In particular, the thread profile comprises wide crest threads, such as trapezoidal threads, square threads or V-threads.

Advantageously, the thread design of the present invention provides larger crest area at the top of each thread. By increasing the size of the crest, the cross-sectional area of each thread tooth is expanded. This provides a stronger structure that can handle higher loads more effectively. The larger tooth cross-section distributes the load more evenly across the thread, reducing localized stress points and enhancing the durability and longevity of the thread connection.

In particular, the thread profile comprises a root, for example, a rounded shape, a flat shape or a sharp.

In particular, the thread profile comprises flat crests and roots, curved crests and roots, or a combination thereof.

In particular, the crest of comprises a beveled flat portion to allow clearance between the crests of the first and second modules.

This, in turn, reduces friction during screwing and improves the stress tolerance of the connection.

In particular, the thread profile of the first module is configured to be screwed (connected) to a thread profile of the second module, wherein the thread profile of the second module comprises standard thread profiles.

In particular, the load flank, stab flank, and crest define a thread tooth with a cross-section larger than that of a standard screw thread.

In particular, the standardized screw thread can include types such as ISO Metric, Buttress, or Trapezoidal threads.

This results in a more even load distribution, improved load-bearing capacity, and longer thread life.

In particular, the thread profile further may further comprise a conical undercut load flank, a bevelled undercut load flank or a radial undercut load flank for thread angles other than 0.

Since the first and second thread angles are greater than 0° (in a positive direction or a negative direction along the threading axis), the specific shape of the undercut of the load flank reduces radial movement between the first and second modules. This, in turn, enhances stability and decreases leakage when the first module is connected to the second module.

For example, by way of the tapered or conical shape of the undercut load flank, the disengagement force required to unscrew the first module from the second module is reduced. This enables faster tightening and loosening during assembly and disassembly.

In particular, the load flank of the thread profile is oriented rearward to the threading axis (Y).

Alternatively, the load flank of the thread profile is oriented forward to the threading axis (Y). In other words, a negative angle of the thread represents an inward tilt of the load flank toward the root of the thread, and a positive angle of the thread represents an outward tilt of the load flank away from the root.

**In** particular, the threaded device is configured to comprise a forward load flank or a rearward load flank, depending on the application requirements.

For example, when the load flank is oriented forward to the threading axis, it enhances load-bearing capacity and stability. This orientation is ideal for applications requiring precise alignment and reduced radial movement. **It** simplifies assembly and disassembly, making it suitable for situations where easy maintenance and a secure fit are critical. Additionally, it helps in better managing axial loads and extending the service life of the threads.

Conversely, a rearward orientation of the load flank increases the holding power and improves sealing by enhancing the friction and grip between the threaded components. This design is advantageous in applications where vibration resistance and a tight seal are essential. In particular, the rearward orientation provides greater resistance to loosening and maintains a stable connection under stress.

In particular, the first module comprises internal female threads.

In particular, the second module comprises external male threads.

Advantageously, the conical shape of the load flank creates a more secure thread engagement, reducing the likelihood of radial displacement between the two modules. This, in turn, results in a stable and leak-resistant connection.

Advantageously, the asymmetrical angled flanks reduce stress on the threads during high-pressure applications, which further enhances the durability of the connection.

Advantageously, the thread profile of the present invention provides a better resistance to vibrational loosening, ensuring the cartridges remain securely fastened in dynamic environments.

In particular, the threaded device of the present invention is configured to be used in an air treatment system, wherein the air treatment system comprises a pressurized air treatment device including a second module, and wherein the second module comprises standard thread profile that is configured to be connected to the thread profile of the first module of the threaded device.

According to another preferred embodiment, an air treatment system for a vehicle compressor is provided. The air treatment device comprises
- a first module, preferably comprising internal female threads,
- a second module, preferably comprising external male threads.
- wherein the first module is configured to be connected to the second module via threaded connections,
- wherein the first module comprises a thread profile,
- wherein the thread profile comprises a load flank and a stab flank, and
- wherein the thread profile is configured such that either the load flank is configured to form a first thread angle with an axis (X) perpendicular to a threading axis (Y), or the stab flank is configured to form a second thread angle with an axis (X) perpendicular to a threading axis (Y),
- wherein the first thread angle varies between 0° to 15°, and the second thread angle varies between 0° to -15°.

In particular, the first module comprising internal threads (female threads), wherein the internal threads, for example, comprise a helicoidal arrangement with a crest, root, load flank, and stab flank.

In particular, the second module comprising external threads (male threads), wherein the external threads are complementary to the internal threads of the first module, and comprise a crest, root, load flank, and stab flank.

In particular, the threaded device (or a first device) comprises a filter cartridge, such as an air dryer cartridge, an oil cartridge, a water cartridge or a chemical filter cartridge.

In particular, the second module comprises a compressed air unit, an engine unit, or a water treatment unit.

In particular, the filter cartridge comprises an air dryer cartridge configured for an air treatment unit of a vehicle, an oil filter cartridge configured for a vehicle, or a water filter cartridge configured for a water treatment unit.

In particular, the second device (a device other than the threaded device) comprises a pressurized air treatment device of a vehicle, e.g. a utility vehicle, or an oil treatment device of a vehicle.

In particular, the internal threads of the first module are designed to engage with the external threads of the second module to provide enhanced resistance to unscrewing, with the load flank and stab flank of both modules being parallel or having an angular difference to provide additional strength.

In particular, the first module, e.g., the filter cartridge, comprises either the first or second thread angle, which is less than 15° (preferably 12°), and is formed through a rolling process. The thread profile of the present invention maintains the integrity of the material's fibers, improves overall durability, and enhances stability by compressing the material rather than cutting it.

A method of manufacturing a thread profile for a first module of a threaded device (a first device) through a rolling process, wherein the rolling process forms the thread profile by compressing the material, wherein the thread profile includes a load flank and a stab flank, wherein the load flank and stab flank are configured with a first and second thread angles that improve load distribution and reduce friction during engagement and disengagement.

The profile is configured such that either:
- the load flank forms a first thread angle with a radial axis (X) perpendicular to a threading axis (Y), or
- the stab flank forms a second thread angle with an axis (X) perpendicular to a threading axis (Y),
wherein the first thread angle (α₁) varies between 0° and 15°, preferably 0° to 12°, and wherein the second thread angle (α₂) varies between 0° and -15°, preferably 0° to -12°.

The thread profile of the first module is configured to be joined to a thread profile, preferably an isometric thread profile, of a second module.

Further details and advantages of the present invention are explained and described in more detail in the context of the embodiment as illustrated by the enclosed figures.

It is schematically shown:
- Fig. 1: a partial schematic cross-sectional view of a threaded device attached to a second module, indicating a first thread angle; and
- Fig. 2: another partial schematic cross-sectional view of a threaded device attached to a second module, indicating a second thread angle;
- Fig. 3: partial schematic cross-sectional views of threaded devices, indicating different thread angles; and
- Fig. 4: schematic cross-sectional views of two different thread designs, including the first and second thread angles.

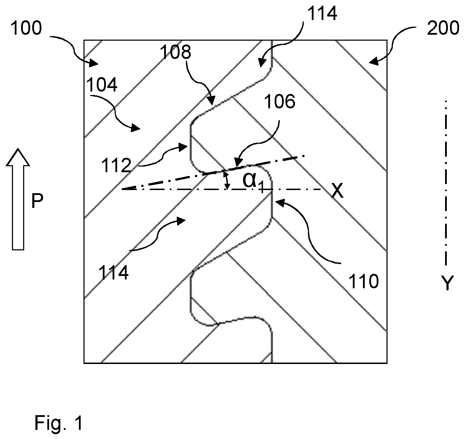

In Fig. 1 a partial schematic cross-section view of a threaded device (a first device), attached to a second module of a second device is shown.

The first device comprises a first module 100. The first module 100 is configured to be screwed to a second module 200 of the second device, an air treatment device (not shown).

The first module 100 comprises a thread profile 104. The thread profile 104 comprises thread teeth 114.

The thread profile 104 is configured to be engaged with a complementary thread profile of the second module 200 of the air treatment device.

The thread profile of the second module 200, for example, incorporates standard thread types commonly used in industrial applications. These may include ISO metric threads, trapezoidal threads, or buttress threads.

The thread profile 104 of the threaded device ensures compatibility with a wide range of components and provides durability under varying operating conditions, such as high pressure or vibrations, commonly encountered in air treatment systems.

The thread profile 104 of the threaded device, specifically a thread tooth 114, comprises a load flank 106, a stab flank (non-loaded side) 108, a crest (the top of the tooth) 110 and a root (the valley between teeth) 112.

A first thread angle α₁ is formed between the load flank and a radial axis X (an axis perpendicular) to a threading axis Y.

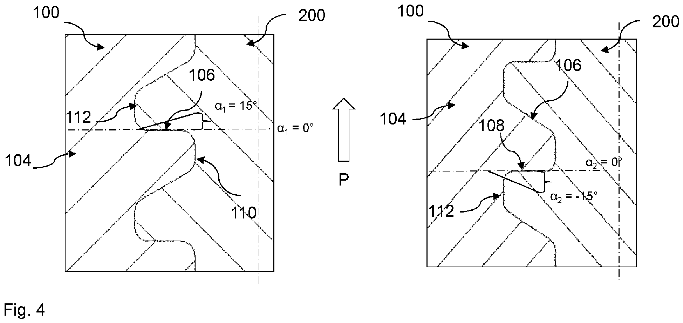

For example, the first thread angle α₁ varies between 0° and 15°. For example, the first thread angle α₁ is within the range of 0° and 15° (see also Fig. 4).

Positive values for the thread angles, i.e. the first thread angle α₁, indicate an angle in the disassembly direction, as shown by arrow P in Fig. 1. This direction also represents the direction in which pressure is applied to the first module.

A second thread angle α₂ is formed between the stab flank and the radial axis X.

The first thread angle α₁ comprise positive acute angles less than 15°, preferably less than 12°.

The second thread angle α₂ (flipped version of the thread profile) comprises acute angles less than -15°, preferably less than less than -12°.

The negative values for thread angles, i.e. the second thread angle α₂, indicate an angle in the assembly direction (i.e. opposite to the direction of P).

In particular, the thread profile, having two different thread designs, is configured to comprises a thread tooth with a cross-section larger than that of a standard screw thread.

For example, the angle on the loaded side is carefully tailored to bear and distribute mechanical forces effectively, ensuring that the thread can handle heavy loads without excessive stress or failure.

The non-loaded side is designed with an angle that makes disengagement easier, reducing friction and resistance during unscrewing.

In particular, the independent thread designs enhance load-bearing capacity and ease of disassembly, improving the overall performance and durability of the connection.

Unlike conventional designs where the angles of the loaded and non-loaded flanks are often symmetrical or uniform, the thread of the present invention allows for separate optimization of each flank.

In standard threads, the load and non-load flanks typically share the same angle, which can limit performance in certain applications. However, in the alternative thread designs of the present invention, the loaded side is specifically engineered in one design to improve load distribution and strength, while in another design the non-loaded side is configured to make unscrewing easier by reducing friction. This independent optimization contrasts with standard threads, allowing for enhanced load-bearing capacity and faster, smoother disassembly, which isn't typically achievable with traditional thread designs.

In this figure, the load flank 106 of the thread profile 104 is oriented rearward to the screwing axis Y.

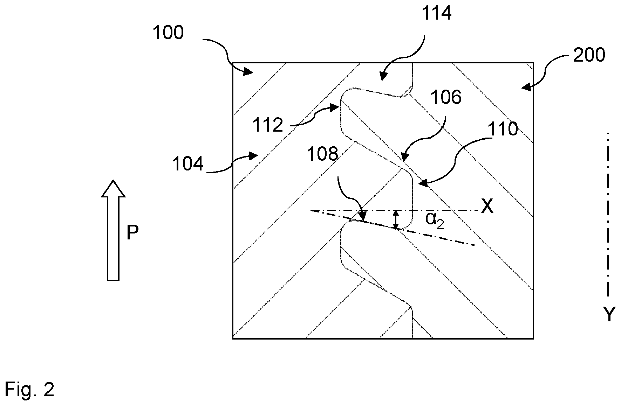

In **Fig. 2** another partial schematic cross-section view of a threaded device is shown.

The components of the threaded device are similar to those of the threaded device shown in Fig. 1 and are indicated using identical reference signs.

The second thread angle α₂ which is formed between the stab flank 108 and the radial axis X varies between 0° and -15°, preferably -12°.

For example, the second thread angle α₂ is within the range of 0° and -5°, -5° and -10° or -10° and 15°.

The load flank 106 of the thread profile 104 is oriented forward to the screwing axis Y.

In particular, the threaded device is configured to comprise a forward load flank or a rearward load flank, depending on the application requirements.

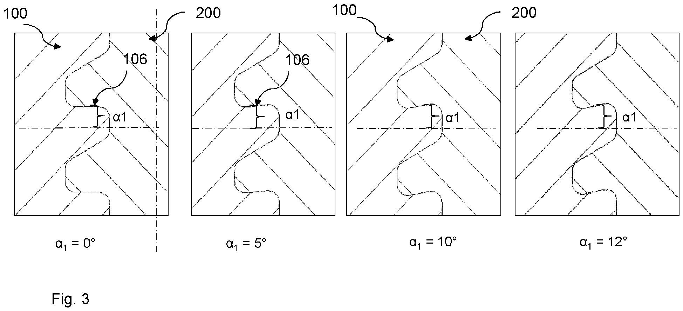

**Fig. 3** shows partial schematic cross-section views of threaded devices, indicating different thread angles.

The range of the first thread angle α₁ in the positive direction (contraclockwise) varies between 0° to 15°.

One of the disadvantages of acute thread angles larger than 15° on the load flank resides in that the threaded device can slip out of alignment, causing deformation of its threads. This misalignment leads to uneven force distribution, thereby concentrating stress in specific areas. The high localized stresses exceed the material's strength, resulting in thread damage and cracking.

These drawbacks have been overcome by the thread profile of the present invention.

In this figure, the first thread angles α₁ of 0°, 5°, 10° and 12° are shown as an example.

For example, when the first thread angle α₁ is small (less than 15°), the reduced surface area on the load flank 106 during disengagement minimizes the contact between the mating surfaces of the threads of the first and second modules.

This leads to significantly lower friction compared to larger thread angles, which allows for smoother unscrewing. As a result, less force is required to disengage the threaded components or modules, which not only makes the disassembly process faster but also reduces wear and tear on the threads.

This is particularly beneficial in applications where frequent maintenance or part replacement is necessary, as it facilitates rapid disassembly without compromising the integrity of the threaded connection over time.

Fig. 4 illustrates schematic cross-sectional views of two different thread designs including the first and second thread angles α₁ and α₂. The ranges of the first and second thread angles are indicated accordingly.

The left view shows the thread profile 104 with the first thread angle α₁ in its normal direction, while the right view shows the second thread angle α₂, i.e. a flipped version of the thread angle α₁.

For example, the normal direction thread (the left view) ensures secure installation and easy removal, making it suitable for standard filtering applications that require consistent performance under normal operating conditions. The flipped version of the thread design (the right view) is advantageous for applications where filter cartridges are subject to reverse flow or pressure surges, preventing loosening and ensuring a more reliable seal.

The process of producing a thread profile typically involves a thread cutting process or a thread rolling process.

The process of thread cutting is a subtractive process where material is removed from the workpiece to form the thread profile. Cutting allows for precise control over thread dimensions and is particularly useful for creating custom or complex thread profiles. It is suitable for a wide range of materials, including harder or more brittle substances, making it versatile. However, thread cutting can result in weaker threads due to the introduction of microfractures and produces a rougher surface finish, which may require additional treatment. Additionally, the process generates material waste as the threads are formed by removal.

The process of thread rolling, on the other hand, is a cold-forming process where the threads are created by pressing dies into the surface of the workpiece, displacing the material to form the thread profile. This method strengthens the threads through work hardening and leaves a smooth surface finish, reducing the need for post-processing. Rolling is faster and more efficient for mass production, with no material waste.

Advantageously, the thread profile 104 with the first thread angle α₁ of the loaded flank 106 less than 15° can be produced by the rolling process.

Since in the thread rolling process, material is not cut but rather deformed to form the threads, there is no risk of microcracks typically associated with cutting processes, such as turning. As a result, threads produced by rolling are much more resistant to stress, offering superior strength and durability compared to threads produced by cutting methods. This makes thread rolling a more reliable option for applications that require high load-bearing capacity and longevity.

When the thread profile has a more inclined angle (e.g. α > 15°), it tends to slip under load, leading to increased thread deformation and higher localized stresses. These high stresses can cause thread damage, including cracking, especially on the last thread flank over the component's lifecycle.

In cartridge threads, which are typically made of steel, the rolling process enhances stability by compressing the material rather than cutting it, which helps maintain the integrity of the material's fibres and improves overall durability.

In summary, the thread design of the present invention features independent and optimized thread angles for the load flank and the stab flank. These angles are not symmetrically formed. The angle of the load flank, which bears the primary load during engagement, is optimized separately from the angle of the stab flank, which is involved in the disengagement process. The non-symmetrical and independent angles allow each flank to be tailored for its specific function. The load flank is designed to enhance load distribution and strength, while the stab flank is designed to reduce friction and facilitate smoother disassembly. This independent adjustment of angles ensures improved performance and efficiency in both engagement and disengagement of the threaded connection. Using thread angles ranging from 0° to ±15° also speeds up the assembly and disassembly process.

### Reference signs

- 100: First module
- 104: Thread profile
- 106: Load flank
- 108: Stab flank
- 110: Crest
- 112: Root
- 114: Thread tooth
- 200: Second module
- X: Radial axis
- Y: Threading axis
- P: Pressure side or disassembly direction
- α₁: First thread angle
- α₂: Second thread angle

## Claims

1. A threaded device, in particular a filter cartridge, comprising a first module (100) configured to be connected to a second module (200) via threaded connections,
wherein the first module (100) comprises a thread profile (104),
wherein the thread profile (104) comprises a load flank (106) and a stab flank (108), wherein the thread profile (104) is configured such that the load flank (106) is configured to form a first thread angle (α₁) with a radial axis (X) perpendicular to a threading axis (Y), wherein the first thread angle (α₁) varies between 0° and 15°, or
wherein the thread profile (104) is configured such that the stab flank (108) is configured to form a second thread angle (α₂) with a radial axis (X) perpendicular to a threading axis (Y), wherein the second thread angle (α₂) varies between 0° and -15°.

2. The threaded device according to claim 1,
**characterized in that**
the first thread angle (α₁) comprises angles varying between 0° and 5°, 5° and 10°, or 10° and 15°,
wherein the second thread angle (α₂) comprises angles varying between 0° and -5°, -5° and -10°, or -10° and -15°,
wherein positive values indicate an angle in a disassembly direction (P), and negative values indicate an angle in an assembly direction.

3. The threaded device according to claim 1 or claim 2,
**characterized in that**
the first module (100) comprises internal female threads.

4. The threaded device according to any one of the preceding claims,
**characterized in that**
the thread profile (104) further comprises a crest (110) that is wider than a crest of standard thread profiles, wherein the crest (110) comprises a rounded shape, a flat shape or a sharp shape.

5. The threaded device according to any one of the preceding claims,
**characterized in that**
the thread profile (104) comprises a root (112), wherein the root (112) comprises a rounded shape, a flat shape or a sharp shape

6. The threaded device according to any one of the preceding claims,
**characterized in that**
the thread profile (104) comprises V-threads, trapezoidal threads, square threads

7. An air treatment system for a vehicle compressor, comprising a threaded device, preferably according to any one of claims 1 to 6, and a second module (200),
wherein the threaded device comprises a first module (100) that is configured to be connected to the second module (200) via threaded connections,
wherein the first module (100) comprises a thread profile (104),
wherein the thread profile (104) comprises a load flank (106) and a stab flank (108), wherein the thread profile (104) of the first module (100) is configured such that the load flank (106) is configured to form a first thread angle (α₁) with an axis (X) perpendicular to a threading axis (Y), the first thread angle (α₁) varying between 0° to 15°, or
wherein the thread profile (104) of the first module (100) is configured such that the stab flank (108) is configured to form a second thread angle (α₂) with an axis (X) perpendicular to a threading axis (Y), the second thread angle (α₂) varying between 0° to -15.

8. The air treatment system according to claim 7,
**characterized in that**
the first module (100) comprises internal threads, and the second module (200) comprises external threads.

9. The air treatment system according to claim 7 or claim 8,
**characterized in that**
the threaded device comprises a filter cartridge, in particular an air dryer cartridge, and the second module (200) comprises a pressurized air treatment device of a vehicle.
